# EUROPÄISCHE PATENTANMELDUNG

(11) **EP 0 822 024 A1**
(43) Veröffentlichungstag der Anmeldung: **04.02.1998**
(21) Anmeldenummer: 97112863.2
(22) Anmeldetag: 24.07.1997
(51) Int. Cl.: B23K 9/013

(54) **Verfahren zum Herstellen einer Schraubverbindung,Vorrichtung zum Bearbeiten eines Werkstücks, insbesondere zum thermischen Lochstechen, Schraube sowie Verwendung einer Schraube**

(30) Priorität: 29.07.1996 DE 19630518
(71) Anmelder: Klees, Horst D., 35236 Breidenbach-Achenbach (DE)
(72) Erfinder: Klees, Horst D., 35236 Breidenbach-Achenbach (DE)
(74) Vertreter: Eisenführ, Speiser & Partner

(57) **Zusammenfassung**

Bei einem Verfahren zum Herstellen einer Schraubverbindung, bei dem in einem Werkstück ein Durchbruch ausgebildet und eine gewindeformende Schraube in den Durchbruch eingeschraubt wird, ist erfindungsgemäß vorgesehen, daß der Durchbruch mittels eines Lichtbogens, eines Elektronenstrahls oder eines Laserstrahls ausgebildet wird. Eine Weiterbildung sieht vor, daß die Schraube (38, 40) während der Ausbildung des Durchbruchs als Schweiß-Elektrode eingesetzt wird. Bei einer Vorrichtung zum Bearbeiten eines Werkstücks (2), insbesondere zum thermischen Lochstechen, mit einem Schneidbrenner (4), welcher einen Lichtbogen, einen Elektronenstrahl oder einen Laserstrahl zur Einwirkung auf das Werkstück (2) bereitstellt, ist erfindungsgemäß vorgesehen, daß der Schneidbrenner (4) mindestens zwei voneinander trennbare Teile aufweist, die aus einer Betriebsstellung unter Bildung eines Zwischenraums (34) in eine Ruhestellung auseinanderfahrbar sind, so daß in der Ruhestellung ein beliebiges Werkzeug zum weiteren Bearbeiten des Werkstücks (2) durch den Zwischenraum (34) bewegbar ist, und die zürck in die Betriebsstellung zusammenfahrbar sind.

## Beschreibung

Die vorliegende Erfindung betrifft in einem ersten Aspekt ein Verfahren zum Herstellen einer Schraubverbindung, bei dem in einem Werkstück ein Durchbruch ausgebildet und eine gewindeformende Schraube in den Durchbruch eingeschraubt wird.

In einem zweiten Aspekt betrifft die Erfindung eine Vorrichtung zum Bearbeiten eines Werkstücks, insbesondere zum thermischen Lochstechen, mit einem Schneidbrenner, welcher einen Lichtbogen, einen Elektronenstrahl oder einen Laserstrahl zur Einwirkung auf das Werkstück bereitstellt.

In einem dritten Aspekt betrifft die Erfindung eine Schraube sowie in einem vierten Aspekt die Verwendung einer Schraube.

Ein Verfahren der eingangs genannten Art ist beispielsweise aus der DE 39 09 725 C1 bekannt. Diese Druckschrift beschreibt eine sogenannte loch- und gewindeformende Schraube mit einem Lochformteil und einem ein selbstformendes Gewinde aufweisenden Zylinder- oder Gewindeteil. Die Schraube wird zum Herstellen einer Schraubverbindung auf ein dünnes Metallblech aufgedrückt und mit einer hohen Drehzahl rotiert, um unter Bildung von Reibungswärme zwischen dem Lochformteil und dem Metallblech eine Plastifizierung des Metallblechs und ein Eindringen des Lochformteils in das plastifizierte Metallblech zu verursachen. Auf diese Weise wird eine Bohrung oder Durchbruch in dem Metallblech hergestellt, und das Gewindeteil wird unter Ausbildung eines Gewindes in dem Metallblech in das Werkstück eingetrieben. Während des Ausbildens der Bohrung in dem Metallblech kann sich in diesem zunächst eine sogenannte Düse oder Rosette ausbilden, bis das Gewindeteil der Schraube die Düse erreicht und in das Metallblech eindringt und in diesem das entsprechende Gewinde furcht. Beim Eintreiben der Schraube in das Metallblech ist unter Entstehung von erheblicher Reibungswärme ein stark zunehmendes Drehmoment sowie eine hohe Kraft in Axialrichtung der Schraube erforderlich.

Das bekannte Verfahren weist den Nachteil auf, daß aufgrund des erforderlichen hohen Drehmoments und der hohen Axialkraft während des Eintreibens der Schraube ein entsprechend starkes und somit verhältnismäßig teueres Eintreibwerkzeug erforderlich ist. Ferner weist das Verfahren den Nachteil, daß die Genauigkeit beim Ausbilden der Bohrung beschränkt ist, denn während der Plastifizierung des Metallblechs und der Ausbildung der Düse kann die Schraube etwas seitlich in eine Richtung senkrecht zur Längsachse der Schraube "ausweichen" oder "auswandern". Dieses "Auswandern" kann durch eine ungleichmäßige Plastifizierung begünstigt werden, die aus einer ungleichmäßigen Wärmeableitung innerhalb des Metallblechs oder aufgrund von strukturellen Inhomogenitäten in dem Metallblech resultieren kann. Dies hat zur Folge, daß die Schraube nicht genau an der vorgesehenen Position eingeschraubt wird, sondern in einer von dieser abweichenden Position.

Eine Vorrichtung der eingangs genannten Art zum Bearbeiten eines Werkstücks kann beispielsweise zum sog. Lochstechen, d.h. zum Herstellen eines Durchbruchs, oder zum Herstellen eines Schnitts in einem metallischen Werkstück eingesetzt werden. Derartige Vorrichtungen können manuell oder maschinell gehalten und geführt werden. Im Falle einer maschinellen Führung der Vorrichtung kann es erwünscht sein, das Werkstück nach der Bearbeitung durch Einwirkung des Lichtbogens, Elektronenstrahls oder Laserstrahls mit Hilfe eines weiteren Werkzeugs nachzubearbeiten. Für eine solche Nachbearbeitung muß die Vorrichtung relativ zum bearbeiteten Werkstück bewegt werden, so daß das Werkstück für das Nachbearbeitungs-Werkzeug zugänglich ist. Die Relativbewegung zwischen Vorrichtung und Werkstück kann manuell ausgeführt werden, oder es sind Verfahreinrichtungen erforderlich. Die Vorrichtung ist somit verhältnismäßig aufwendig.

Die eingangs beschriebene Schraube weist den Nachteil auf, daß sie während der Ausbildung der Bohrung mechanisch und thermisch extrem beansprucht wird.

Der vorliegenden Erfindung liegt die Aufgabe zugrunde, ein Verfahren, eine Vorrichtung sowie eine Schraube bereitzustellen, bei dem/der die Nachteile des Standes der Technik weitgehend vermieden werden können und mit dem/der auf einfache und präzise Weise eine Schraubverbindung hergestellt werden kann bzw. ein Werkstück bearbeitet werden kann.

Die Aufgabe wird gemäß dem ersten Aspekt der Erfindung mit einem Verfahren der eingangs genannten Art dadurch gelöst, daß der Durchbruch mittels eines Lichtbogens, eines Elektronenstrahls oder eines Laserstrahls ausgebildet wird.

Die Aufgabe wird gemäß dem zweiten Aspekt der Erfindung mit einer Vorrichtung der eingangs genannten Art gelöst, bei der der Schneidbrenner mindestens zwei voneinander trennbare Teile aufweist, die aus einer Betriebsstellung unter Bildung eines Zwischenraums in eine Ruhestellung auseinanderfahrbar sind, so daß in der Ruhestellung ein beliebiges Werkzeug zum weiteren Bearbeiten des Werkstücks durch den Zwischenraum bewegbar ist, und die zurück in die Betriebsstellung zusammenfahrbar sind.

Gemäß dem dritten Aspekt der Erfindung wird die Aufgabe gelöst durch eine Schraube mit einem im vorderen Bereich als Schweißelektrode verwendbaren Elektrodenabschnitt sowie durch die Verwendung einer Schraube als Elektrode beim Schneiden oder Schweißen.

Das erfindungsgemäße Verfahren weist den Vorteil auf, daß durch die Ausbildung des Durchbruchs oder einer Bohrung, mittels eines Lichtbogens oder eines Elektronen- oder Laserstrahls den Durchbruch und somit die Schraubverbindung exakt an der Stelle des Werkstücks vorgesehen werden kann, die gewünscht ist, ohne daß es zu einem Auswandern der Schraube während des Eintreibens in das Werkstück kommt, wie dies beim Stand der Technik der Fall sein kann. Die erfindungsgemäße Ausbildung des Durchbruchs gewährleistet eine exakte Positionierung des Durchbruchs in dem Werkstück. Ein weiterer wichtiger Vorteil besteht darin, daß während des Ausbildens des Durchbruchs keine großen Kräfte auf das Werkstück, etwa ein dünnes Metallblech, aufgebracht werden, die das Blech verbiegen könnten, wie dies beim eingangs erwähnten Verfahren der Fall ist. Ferner entsteht kein Span beim Durchstechen, der beim Eintreiben der Schraube stören könnte.

Die erfindungsgemäße Vorrichtung zum Bearbeiten eines Werkstücks weist gegenüber dem Stand der Technik ebenfalls eine Reihe von Vorteilen auf. Durch die mindestens zweiteilige Ausbildung des Schneidbrenners, deren trennbare Teile unter Bildung eines Zwischenraums auseinanderfahrbar sind, kann nach dem Einwirken des Lichtbogens oder -strahls das Werkstück mit Hilfe eines beliebigen Werkzeugs nachbearbeitet werden, ohne daß als Vorraussetzung für diese Nachbearbeitung eine Relativbewegung zwischen Werkstück und Schneidbrenner der erfindungsgemäßen Vorrichtung erforderlich wäre, um das Werkstück für ein Bearbeitungs-Werkzeug zugänglich zu machen. Durch die erfindungsgemäße Konstruktion kann die Vorrichtung besonders kompakt gebaut werden und insbesondere an schwer zugänglichen, räumlich begrenzten Orten zur Bearbeitung von Werkstücken, die "vor Ort" installiert sind, eingesetzt werden. So wird beispielsweise in einem Werkstück zunächst ein Durchbruch ausgebildet, und anschließend werden die trennbaren Teile unter Bildung eines Zwischenraumes in eine Ruhestellung auseinandergefahren. In dieser Ruhestellung kann beispielsweise ein Entgrat-Werkzeug zum Entgraten der hergestellten Bohrung oder ein Schraubwerkzeug zum Eintreiben einer Schraube durch den Zwischenraum hindurchbewegt werden. Nach der Nachbearbeitung des Werkstücks wird das Werkzeug wieder aus dem Zwischenraum hinausbewegt, und die auseinandergefahrenen Teile werden wieder in ihre Betriebsstellung zusammengefahren. In dieser Betriebsstellung kann der Schneidbrenner erneut aktiviert werden, um beispielsweise einen weiteren Durchbruch herzustellen.

Das erfindungsgemäße Verfahren wird in vorteilhafter Weise dadurch weitergebildet, daß der Lichtbogen oder Strahl eine rotierende Bewegung um seine Längsachse ausführt. Durch die Rotation wird gewährleistet, daß eine zylindrische Durchbruchs-Bohrung, und nicht ein länglicher Schlitz oder eine Bohrung mit einem ungleichmäßigen Rand entsteht. Zweckmäßigerweise wird der Lichtbogen eingeschnürt, wodurch ein sog. Stichlocheffekt entsteht. Das erfindungsgemäße Verfahren wird ferner dadurch weitergebildet, daß der Lichtbogen oder -strahl eine Pendelbewegung ausführt, wodurch sich ein Loch mit einem etwa rechteckigen Querschnitt herstellen läßt.

Gemäß einer weiteren, vorteilhaften Ausführungsform des erfindungsgemäßen Verfahrens wird der Lichtbogen durch Wolfram-Inertgas- oder Plasma-Schneidverfahren erzeugt. Geräte zur Ausführung derartiger Schneidverfahren sind verbreitet und somit verhältnismäßig kostengünstig.

Eine besonders bevorzugte Ausführungsform der Erfindung zeichnet sich dadurch aus, daß die Schraube während des Durchstechens der Bohrung als Schweiß- bzw. Schneid-Elektrode eingesetzt wird, so daß die Schraube erstmals eine Mehrfachfunktion bekommt, die darin besteht, daß sie zunächst zum Ausbilden des Durchbruchs durch Schneiden bzw. Schweißen, dann zum Herstellen des Gewindes und schließlich zum Herstellen einer Schraubverbindung genutzt wird.

Anstelle einer Schraube können auch andere Formteile aus unlegierten oder legierten Stählen als Elektrode mit Hilfe des erfindungsgemäßen Verfahrens verarbeitet werden, etwa Gewindehülsen, Gewindebolzen, Spreizdübel oder Stifte, letztere bis zu einem Durchmesser von etwa 39 mm.

Gemäß einer bevorzugten Weiterbildung des erfindungsgemäßen Verfahrens wird dem Werkstück im Bereich des Durchbruchs vor dem Einschrauben der Schraube Wärme zugeführt, um die Plastizität des Werkstücks zu beeinflussen. Durch die Wärmezufuhr vor dem Einschrauben kann eine gewünschte Plastizität, die zum Einschrauben günstig ist, aufrechterhalten werden. Die gewindeformende Schraube läßt sich dadurch auf einfache, energiesparende Weise in das Werkstück eintreiben. Auf einfache Weise wird die Wärme mittels eines Lichtbogens zugeführt. Der Lichtbogen kann der ohnehin zum Herstellen des Bohrlochs verwendete Lichtbogen oder ein sogenannter Hilfslichtbogen sein. Die erforderliche Wärme wird gezielt an den inneren Begrenzungsflächen der Bohrung in das Werkstück eingeleitet.

Das erfindungsgemäße Verfahren wird ferner dadurch weitergebildet, daß die Schraube während des Einschraubens mittels einer Eintreibvorrichtung mit verschiedenen Drehzahlen rotiert wird und/oder dadurch daß die Schraube mit variierbaren Axialkräften beaufschlagt wird. Der Einschraubvorgang kann somit an spezifische Werkstückeigenschaften sowie Schraubenformen und -werkstoffe angepaßt werden.

Eine bevorzugte Ausführungsform der erfindungsgemäßen Vorrichtung zeichnet sich dadurch aus, daß der Schneidbrenner zwei im wesentlichen identisch ausgebildete Brennerhälften aufweist, die im wesentlichen in einer Richtung senkrecht zur Ausbreitungsrichtung des Lichtbogens oder Strahls auseinander- bzw. zusammenfahrbar sind. Durch die im wesentlichen identische Ausbildung zweier Brennerhälften ist der mehrteilige Schneidbrenner auf besonders einfache konstruktive Weise verwirklicht, während sich durch die beschriebene Verfahrrichtung der Brennerhälften ein relativ großer Zwischenraum bei geringen Verfahrwegen bildet. In den Zwischenraum kann - in Ausbreitungsrichtung des Lichtbogens - ein beliebiges Werkzeug hineingefahren werden kann. Gemäß einer Weiterbildung dieser Ausführungsform sind die Brennerhälften mittels einer pneumatischen Antriebseinrichtung auseinander- bzw. zusammenfahrbar.

Weist die erfindungsgemäße Vorrichtung eine Eintreibvorrichtung zum Eintreiben der gewindeformenden Schraube in eine mittels des Schneidbrenners im Werkstück ausgebildete Bohrung auf, die ihrerseits ein in dem Zwischenraum bewegbares Schraubwerkzeug zum Eintreiben der Schraube aufweist, ist die erfindungsgemäße Vorrichtung besonders geeignet zur Durchführung des zuvor beschriebenen erfindungsgemäßen Verfahrens zum Herstellen einer Schraubverbindung unter Verwendung einer gewindeformenden Schraube.

Diese Ausführungsform der Erfindung wird weitergebildet, indem das Schraubwerkzeug im wesentlichen als rotierbares und in Richtung seiner Längsachse translatorisch bewegbares Stabelement ausgebildet ist, an dessen Ende Mittel zum Halten der Schraube vorgesehen sind. Das Stabelement hat einen verhältnismäßig kleinen Querschnitt und erfordert nur einen kleinen Zwischenraum zwischen den Brennerhälften, so daß die Brennerhälften nur über geringe Wegstrecken verfahrbar zu sein brauchen. Die Mittel zum Halten der Schraube können beispielsweise als im wesentlichen unbewegliche Klemm-Mittel ausgebildet sein, so daß die Schraube mittels ihres Kopfes an das Schraubwerkzeug angeklemmt wird. Alternativ können die Mittel zum Halten pneumatisch bewegbare Klemmelemente aufweisen.

Eine weitere Ausführungsform der Erfindung zeichnet sich dadurch aus, daß der Schneidbrenner Teil eines Wolfram-Inertgas- oder Plasma-Schneidgerätes ist, denn derartige Geräte sind weit verbreitet und relativ kostengünstig. Darüber hinaus weisen sie sehr gute Schneid- bzw. Lochstecheigenschaften auf, so daß eine präzise Bohrung vorgenommen werden kann.

Gemäß einervorteilhaften Weiterbildung dieser Ausführungsform wird eine Schraube als Elektrode des Schneidbrenners eingesetzt. Die Schraube kann nach ihrem Einsatz als Elektrode zur Herstellung der Schraubverbindung in das Werkstück eingetrieben werden. Hierzu werden nach der Ausbildung des Durchbruchs in dem Werkstück die Brennerhälften in ihre Ruhestellung auseinandergefahren. Anschließend wird die Eintreibvorrichtung aktiviert, und das Schraubwerkzeug beginnt eine Rotationsbewegung sowie eine translatorische Bewegung und treibt die Schraube in das Werkstück. Nachdem die Schraube vollständig eingetrieben ist, werden die Mittel zum Halten der Schraube gelöst und das Schraubwerkzeug wird translatorisch in seine Ausgangsposition zurückgefahren. Anschließend werden die Brennerhälften zurück in ihre Betriebsstellung gefahren, nachdem eine neue Schraube zwischen den Brennerhälften positioniert worden ist, um erneut als Elektrode verwendet zu werden. Anschließend kann eine weitere Durchbruchs-Bohrung unter Verwendung der Schraube als Elektrode ausgebildet werden.

Die erfindungsgemäße Vorrichtung wird ferner durch Mittel zum Einschnüren und/oder Ablenken des Lichtbogens bzw. des Strahls weitergebildet, denn durch das Einschnüren des Lichtbogens oder -strahls wird die Qualität der Bohrung deutlich verbessert und die Energie gebündelt (sog. Stichlocheffekt), so daß der Energieeintrag in das Werkstück optimiert ist. Durch die Mittel zum Ablenken kann ferner eine rotierende Bewegung oder eine Pendelbewegung des Lichtbogens bzw. -strahls verwirklicht werden.

Die der Erfindung zugrunde liegende Aufgabe wird gemäß des dritten Aspekts der Erfindung gelöst durch eine Schraube mit einem im vorderen Bereich angeordneten, als Schweißelektrode verwendbaren Elektrodenabschnitt. Der Elektrodenabschnitt kann aus einem Material bestehen, das günstige Eigenschaften für diese Verwendung aufweist. Zweckmäßigerweise weist der Elektrodenabschnitt eine Aufnehmung auf, die einen Elektrodeneinsatz auf Wolfram oder dergleichen aufnimmt. Die Ausnehmung ist zweckmäßigerweise im wesentlichen zylinderförmig, um auf einfache Weise etwa durch Drehen hergestellt werden zu können und um an die im wesentlichen rotationssymmetrische Form einer Schraube angepaßt zu sein.

Gemäß einer vorteilhaften Ausführungsform der erfindungsgemäßen Schraube weist der Elektrodenabschnitt gegenüber dem Gewindeabschnitt einen geringeren Durchmesser auf. Der im vorderen Bereich der Schraube angeordnete Elektrodenabschnitt ist bei dieser Ausführungsform mit geringen Kräften in das Werkstück eintreibbar und dient zur Zündung des Lichtbogens.

Zweckmäßigerweise weist die erfindungsgemäße Schraube einen Kopfabschnitt und einen Gewindeabschnitt auf, der beim Einschrauben in eine Bohrung ein Gewinde formt, und der erfindungsgemäße Elektrodenabschnitt weist einen sich konisch in Richtung auf die Spitze der Schraube verjüngenden Aufweit-Abschnitt auf, so daß die Schraube während des Eintreibens die Bohrung aufweitet. Die Bohrung kann einen verhältnismäßig kleinen Durchmesser aufweisen, der durch die Aufweitung vergrößert wird, während das durch den Gewindeabschnitt sich ausbildende Gewinde eine Länge aufweist, die größer ist als die Dicke des Werkstücks, denn durch die Aufweitung kommt es zu einer Verdickung des Materials im Bereich der Bohrung, die gelegentlich als Rosette oder Düse bezeichnet wird.

Die Erfindung wird nachfolgend anhand von Ausführungsbeispielen unter Bezugnahme auf die beiliegenden Zeichnungen beschrieben. Es zeigen:
- Figur 1: ein erstes Ausführungsbeispiel einer Vorrichtung zum Bearbeiten eines Werkstücks mit einem Schneidbrenner, der zwei Brennerhälften aufweist, in einer Betriebsstellung;
- Figur 2: die Vorrichtung aus Figur 1 in einer Ruhestellung mit einer Eintreibvorrichtung zum Eintreiben einer Schraube in das Werkstück;
- Figur 3: ein alternatives Ausführungsbeispiel einer erfindungsgemäßen Vorrichtung mit einer als Schweißelektrode verwendbaren Schraube;
- Figur 4: eine erfindungsgemäße Schraube mit einem Elektrodenabschnitt im vorderen Bereich der Schraube; und
- Figur 5: ein alternatives Ausführungsbeispiel einer erfindungsgemäßen Schraube mit Elektrodenabschnitt.

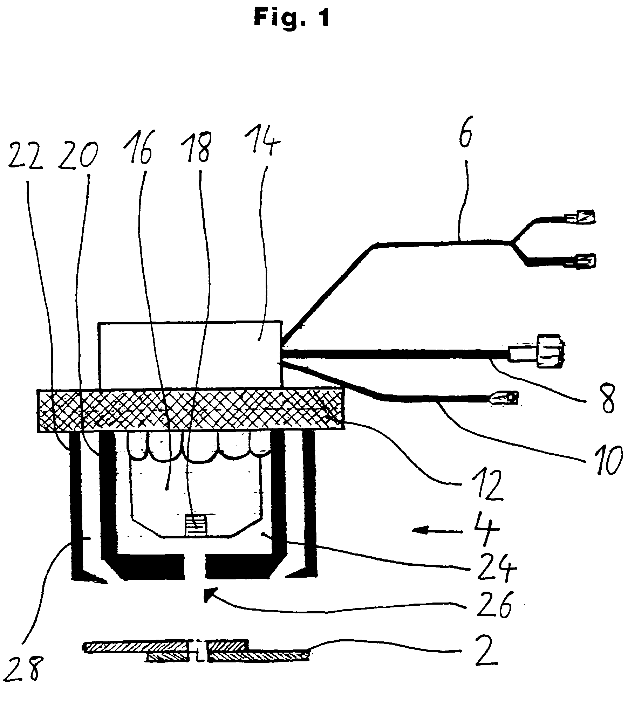

Die in Figur 1 dargestellte Vorrichtung zum Bearbeiten eines Werkstücks 2 weist einen Plasma-Schneidbrenner 4 auf, der Teil eines Plasma-Schneidgerätes ist. Der Schneidbrenner 4 weist eine Steuerleitung 6, eine Strom- bzw. Gasleitung 8 sowie eine Pilotstrom-Leitung 10 auf, die mit zugehörigen Anschlüssen versehen sind, um an die zugehörigen Teile des Plasma-Schneidgerätes angeschlossen werden zu können. Die Leitungen 6, 8, 10 können innerhalb eines nicht dargestellten Schlauchpaketes angeordnet sein. Zusätzlich können Leitungen für Kühlflüssigkeiten wie Wasser vorgesehen sein. Im Ausführungsbeispiel ist das Schneidgerät als Plasma-Schneidgerät ausgebildet, aber alternativ kann ein Elektronenstrahl- oder Laserstrahl-Schneidgerät vorgesehen sein, um das Werkstück 2 mit Hilfe eines Elektronenstrahls oder Laserstrahls zu bearbeiten. Ferner kann auch ein Wolfram-Inertgas-Schweißgerät vorgesehen sein.

Der Schneidbrenner 4 weist eine Grundplatte 12 sowie einen an der Grundplatte 12 befestigten Anschlußabschnitt 14 auf, der mit den Leitungen 6, 8, 10 verbunden ist. Unterhalb der Grundplatte 12 sind ein Brennerkopf 16, der eine Elektrode 18 aufnimmt, ein Leitelement 20 sowie eine Kappe 22 befestigt. Zwischen dem Brennerkopf 16 und dem Leitelement 20 ist ein Plasmagaskanal 24, der eine Brenner-Düse 26 aufweist, sowie ein Inertgaskanal 28 ausgebildet, der eine umlaufende Düsenöffnung aufweist, die dem Werkstück 2 gegenüberliegt. Ausgehend von der Elektrode 18 kann ein Lichtbogen erzeugt werden, der sich in Richtung auf die Düse 26 erstreckt. Durch den Plasmagaskanal 24 kann ein Plasmagas in Richtung auf den Lichtbogen und die Düse 26 geleitet werden, so daß ein Plasmastrahl entsteht, der sich von der Düse 26 in Richtung auf das Werkstück 2 erstreckt. In dem Inertgaskanal 28 kann ein Strom von Inertgas wie etwa Argon erzeugt werden, der den Plasmastrahl außerhalb der Düse 26 umgibt, so daß eine Schutzhülle aus Inertgas um den Plasmastrahl gebildet ist. In Figur 1 ist der Schneidbrenner 4 in einer Betriebsstellung dargestellt, in der ein Plasmastrahl zur Einwirkung auf das Werkstück 2 erzeugt werden kann.

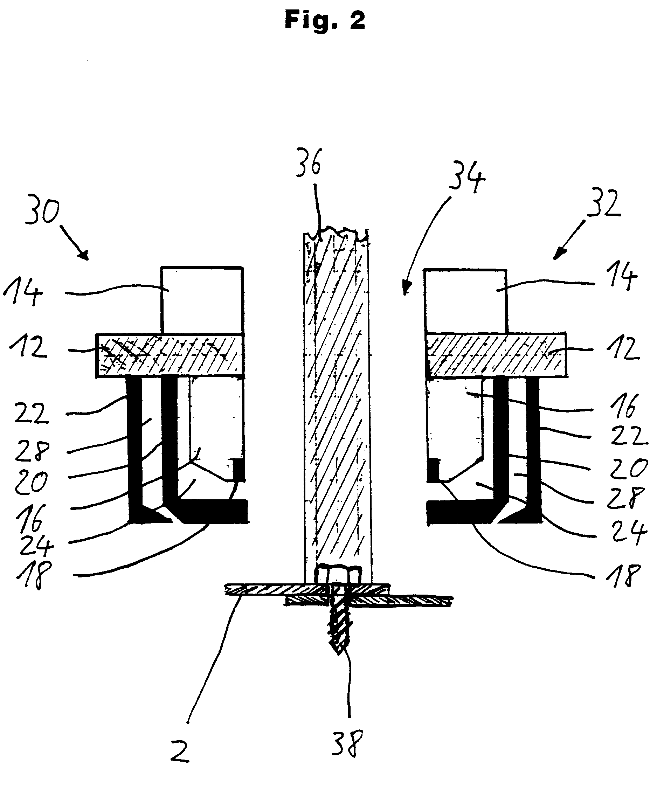

In Figur 2 ist der Schneidbrenner 4 in einer Ruhestellung dargestellt, in der kein Plasmastrahl erzeugt werden kann. Der Schneidbrenner 4 weist zwei im wesentlichen identisch ausgebildete Brennerhälften 30, 32 auf, die durch einen ebenen, in Figur 2 senkrecht verlaufenden Schnitt getrennt sind. Die Schnittebene verläuft zentral durch den Schneidbrenner 4, so daß der Anschlußabschnitt 14, die Grundplatte 12, der Brennerkopf 16 mit der Elektrode 18 sowie das Leitelement 20 und die Kappe 22 in jeweils zwei im wesentlichen identische Hälften geteilt sind. Die Elektrode 18 ist in der Ruhestellung somit ebenfalls in zwei Teile getrennt, die jeweils an einer Brennerhälfte befestigt sind. In nicht dargestellter Weise kann die Elektrode auch an einer der beiden Brennerhälften angebracht sein. Zwischen den Brennerhälften 30, 32 liegt ein Zwischenraum 34, der dadurch entstanden ist, daß die zwei Brennerhälften 30 und 32 in einer Richtung senkrecht zur Ausbreitungsrichtung des Plasmastrahls auseinandergefahren worden sind. Zu diesem Zweck ist eine pneumatische Antriebseinrichtung (nicht dargestellt) vorgesehen.

In dem Zwischenraum 34 ist ein stabförmiges Schraubwerkzeug 36 angeordnet, das Teil einer nicht dargestellten Eintreibvorrichtung zum Eintreiben einer Schraube 38 ist. Am unteren Ende des Schraubwerkzeugs 36 sind Mittel zum Halten der Schraube 38 vorgesehen. Die Schraube 38 kann beispielsweise zwischen unbeweglichen Klemmbacken des Schraubwerkzeugs 36 eingeklemmt sein. Alternativ können die Klemmbacken pneumatisch bewegt werden, so daß sie aus einer Haltestellung, in der die Schraube 38 von den Klemmbacken gehalten wird, in eine Lösestellung gebracht werden können, in der die Schraube 38 von dem Schraubwerkzeug 36 gelöst werden kann. Das Schraubwerkzeug 36 ist rotierbar und in Richtung seiner Längsachse translatorisch bewegbar.

Mit Hilfe der nicht dargestellten Antriebseinrichtung können die Brennerhälften 30 und 32 aus der in Figur 2 dargestellten Ruhestellung zurück in ihre in Figur 1 dargestellte Betriebsstellung zusammengefahren werden, in der der Schneidbrenner zur Erzeugung eines Plasmastrahls zur Verfügung steht. In nicht dargestellter Weise können im Bereich der Schnittebene zwischen den Brennerhälften 30 und 32 mehrere Dichtungselemente vorgesehen sein, um die Brennerhälften 30 und 32 gegeneinander abzudichten, so daß das Plasmagas und das Inertgas in der Betriebsstellung sicher innerhalb des Inertgaskanals 28 und des Plasmagaskanals 24 geführt werden.

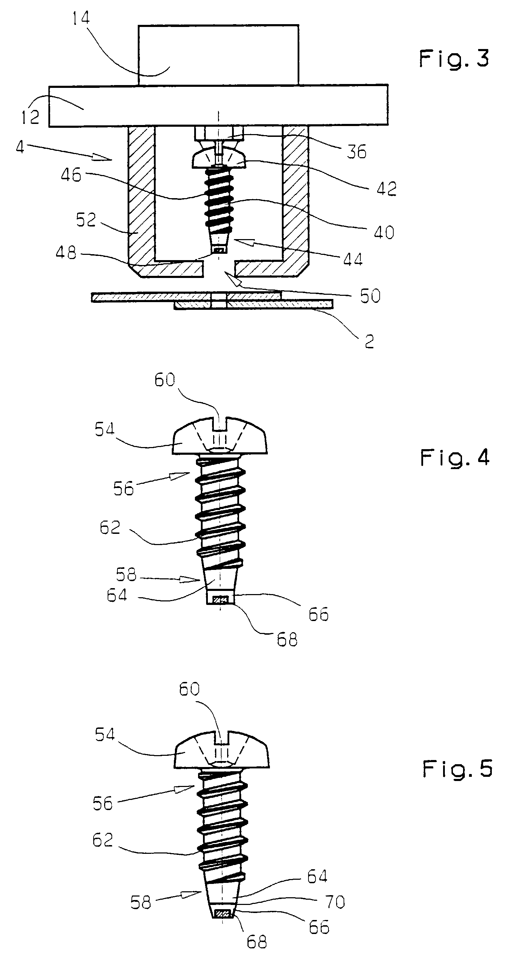

Das in Figur 3 dargestellte, alternative Ausführungsbeispiel der erfindungsgemäßen Vorrichtung zum Bearbeiten eines Werkstücks ist ähnlich ausgebildet wie das zuvor beschriebene Ausführungsbeispiel und unterscheidet sich von letzterem im wesentlichen dadurch, daß der Brennerkopf 16 (Figur 1) durch eine Schraube 40 ersetzt ist, die einen Kopfabschnitt 42 sowie einen in ihrem vorderen Bereich angeordneten Elektrodenabschnitt 44 aufweist. Zwischen Kopfabschnitt 42 und Elektrodenabschnitt 44 der Schraube 40 ist ein Gewindeabschnitt 46 vorgesehen, der beim Einschrauben in eine Bohrung in einem Werkstück 2 ein Gewinde formt. Der Elektrodenabschnitt 44 der Schraube 40 weist einen Elektrodeneinsatz 48 aus einem Elektrodenmaterial wie Wolfram auf. Ausgehend von dem Elektrodeneinsatz 48 kann ein Lichtbogen ausgebildet werden, der sich durch eine Düse 50 erstreckt, die im unteren Bereich einer Kappe 52 ausgebildet ist.

Ein Inertgaskanal, wie in Figur 1 dargestellt, ist im Ausführungsbeispiel in Figur 3 nicht dargestellt, kann aber vorgesehen sein. Nicht dargestellt sind ferner die Anschluß-Leitungen zur Versorgung des Schneidbrenners 4 mit Strom und Gas.

Der Kopfabschnitt 42 der Schraube 40 wird von einem Schraubwerkzeug 36 gehalten, das mit einer elektrischen Spannung beaufschlagt werden kann, um eine Spannung am Elektrodeneinsatz 48 der Schraube 40 bereitzustellen. Das Schraubwerkzeug 36 kann prinzipiell ähnlich ausgebildet sein, wie das zuvor anhand der Figur 2 beschriebene Schraubwerkzeug, das Teil einer Eintreibvorrichtung zum Eintreiben der Schraube 40 ist.

Der in Figur 3 gebildete Schneidbrenner 4 ist ebenfalls in zwei Brennerhälften trennbar. Die Brennerhälften sind in einer Richtung senkrecht zur Ausbreitungsrichtung des Lichtbogens mit Hilfe einer pneumatischen Antriebseinrichtung (nicht dargestellt) auseinander- bzw. zusammenfahrbar. In der Ruhestellung, in der die Brennerhälften auseinandergefahren sind, kann das Schraubwerkzeug 36 in dem durch das Auseinanderfahren der Brennerhälften entstehenden Zwischenraum bewegt werden, um die Schraube 40 in das Werkstück 2 einzutreiben.

Die in den Figuren 4 und 5 dargestellten erfindungsgemäßen Schrauben können in dem in Figur 3 dargestellten Schneidbrenner als Elektrode beim Schneiden oder Schweißen verwendet werden. Anstelle einer Schraube kann auch ein anderes Formteil, beispielsweise ein Stift, eine Gewindehülse, ein Gewindebolzen, ein Spreizdübel, Nagel oder dergleichen verwendet werden.

Die in Figur 4 dargestellte Schraube weist einen Kopfabschnitt 54, einen Gewindeabschnitt 56 sowie einen Elektrodenabschnitt 58 auf. Im Kopfabschnitt 54 ist ein Schlitz 60 vorgesehen, in den ein Schraubenzieher oder ein sonstiges Schraubwerkzeug eingesteckt werden kann. Der Gewindeabschnitt 56 ist mit Flanken 62 versehen, die beim Einschrauben in eine Bohrung in einem Werkstück ein Gewinde furchen. Die Flanken 62 sind in der Darstellung lediglich angedeutet. Sie können verschiedene Steigungen und Formen aufweisen.

Der Elektrodenabschnitt 58 weist einen sich konisch in Richtung auf das vordere Ende der Schraube verjüngenden Aufweit-Abschnitt 64 auf. An den Aufweit-Abschnitt schließt sich ein im wesentlichen zylindrischer End-Abschnitt 66 auf. In dem End-Abschnitt 66 ist zentrisch eine Ausnehmung von im wesentlichen zylindrischer Form ausgebildet, in die ein Elektrodeneinsatz 68 aus Wolfram oder dergleichen eingesetzt ist. Der Elektrodeneinsatz 68 kann in die Ausnehmung eingepreßt sein. Der umlaufende Rand des End-Abschnitts 66 kann etwas angefast sein. Die Schraube kann insbesondere bei nicht rotierenden Einstichlichtbögen verwendet werden.

Die in Figur 5 dargestellte Schraube weist ebenfalls einen Kopfabschnitt 54, einen Gewindeabschnitt 56 und einen Elektrodenabschnitt 58 auf. Kopfabschnitt 54 und Gewindeabschnitt 56 sind im wesentlichen identisch ausgebildet wie bei der zuvor beschriebenen Schraube. Der Elektrodenabschnitt 58 weist einen sich konisch verjüngenden, kegelförmigen Aufweit-Abschnitt 64 auf, in dem an der abgeflachten Spitze der Schraube ein Elektrodeneinsatz 68 in eine Ausnehmung eingepreßt ist.

Ein zylindrischer Abschnitt ist nicht vorgesehen. Die Steigung des Aufweit-Abschnitts 64 kann abschnittsweise verschieden voneinander sein, wie durch die umlaufende Kante 70 angedeutet ist. Der konische Aufweit-Abschnitt 64 dient zur Ausbildung einer sogenannten Rosette oder Düse im noch plastischen Schraubloch, während der unterhalb der umlaufenden Kante 70 verbleibende End-Abschnitt 66 im wesentlichen zur Zentrierung der Schraube im Schraubloch sowie zur Zündung des Lichtbogens dient.

In nicht dargestellter Weise kann der Elektrodenabschnitt 58 alternative Formen aufweisen. Die Form des Elektrodenabschnitt bestimmt im wesentlichen den Durchmesser der herzustellenden Bohrung. So kann sich an dem Gewindeabschnitt 56 - in Richtung auf das vordere Ende der Schraube - ein sich konisch verjüngender Aufweit-Abschnitt anschließen. An diesem konischen Aufweit-Abschnitt kann sich ein im wesentlichen zylindrischer Abschnitt anschließen. Zusätzlich kann sich an dem zylindrischen Abschnitt ein kegelstumpfförmiger, sich konisch verjüngender End-Abschnitt oder ein sich konisch verjüngender, kegelförmiger End-Abschnitt mit einer Spitze anschließen.

Nachfolgend wird das erfindungsgemäße Verfahren zum Herstellen einer Schraubverbindung unter Verwendung einer erfindungsgemäßen Vorrichtung zum Bearbeiten eines Werkstücks sowie einer erfindungsgemäßen Schraube unter Bezugnahme auf die Figuren 1 bis 5 beschrieben:

Zunächst wird in dem Werkstück 2, das als Blech ausgebildet ist, ein Durchbruch ausgebildet. Hierzu wird der beschriebene Schneidbrenner 4 eingesetzt, der einen Lichtbogen oder Plasmastrahl bereitstellt. Dieser wird zum Schmelzen des Werkstücks 2 eingesetzt. Vorzugsweise wird der Lichtbogen oder Plasmastrahl stark eingeschnürt mit Hilfe der Mittel zum Einschnüren, wodurch ein sogenannter Stichlocheffekt erzeugt wird. Alternativ kann ein Elektronenstrahl oder Laserstrahl zur Bohrungsausbildung eingesetzt werden. Lichtbogen oder Strahl führen vorzugsweise eine rotierende Bewegung aus. Wird eine Vorrichtung gemäß Figur 3 eingesetzt, so dient die Schraube 40 oder eine andere, erfindungsgemäße Schraube als Schweißelektrode. Wird eine Vorrichtung gemäß Fig. 2 und 3 eingesetzt, so kann eine gewindeformende Schraube ohne Elektrodenabschnitt verwendet werden. In diesem Fall ist die Schraube in einer Position in Kontakt mit der Elektrode 18 innerhalb des Schneidbrenners 4 angeordnet.

Nachdem die Bohrung ausgebildet ist, wird eine Schraube in die Bohrung eingeschraubt. Hierzu werden die zwei Brennerhälften 30, 32 (Figur 2) mit Hilfe der nicht dargestellten Antriebseinrichtung auseinandergefahren, wobei zwischen beiden Brennerhälften 30, 32 ein Zwischenraum 34 entsteht. In diesen Zwischenraum 34 wird dann das Schraubwerkzeug 36 gefahren, an dessen unterem Ende die Schraube 38, 40 gehalten wird. Die Schraube 38, 40 kommt mit ihrem vorderen Abschnitt in Berührung mit dem Werkstück 2. Der (konische) End-Abschnitt 66 (Figur 5) zentriert die Schraube in der Bohrung. Während des weiteren Eintreibens der Schraube mittels des Schraubwerkzeugs 36 weitet der Aufweit-Abschnitt 64 das plastische Werkstück auf, wobei es zu der Ausbildung einer sogenannten Rosette oder einer sogenannten Düse kommt, in der später das Gewinde gefurcht wird. Die Plastizität des Werkstücks kann dadurch vor dem Einschrauben der Schraube beeinflußt werden, daß ein Lichtbogen innerhalb der Bohrung aufrechterhalten wird. Dann kommt der Gewindeabschnitt 56 in den Bereich des Werkstücks und furcht durch seine Flanken 62 ein Gewinde in die Rosette oder Düse des Werkstücks. Die Drehgeschwindigkeit und der Vorschub des Schraubwerkzeugs 36 können in Abhängigkeit von dem jeweiligen Werkstoff der Schraube als auch des Werkstücks 2 variiert werden. Gleiches gilt für die Axialkraft beim Einschrauben.

Nachdem die Schraube 38, 40 vollständig in das Werkstück 2 eingeschraubt worden ist, werden die Mittel zum Halten der Schraube 38 am Ende des Schraubwerkzeugs 36 gelöst, und das Schraubwerkzeug 36 wird aus dem Zwischenraum 34 (in Figur 2 nach oben) herausgefahren. Anschließend werden die zwei Brennerhälften 30, 32 wieder zusammengefahren, um aus der Ruhestellung in die Betriebsstellung zurückzukommen. In der Betriebsstellung (Fig. 1) kann dann eine weitere Bohrung ausgebildet werden.

Anstelle einer motorisch betriebenen Eintreibvorrichtung kann eine Schraube auch manuell in die Bohrung eingeschraubt werden. Hierzu können entweder die Brennerhälften 30 und 32 auseinandergefahren werden oder der gesamte Brenner aus dem Bereich der Bohrung verfahren werden.

## Patentansprüche

1. Verfahren zum Herstellen einer Schraubverbindung, bei dem in einem Werkstück ein Durchbruch ausgebildet und eine gewindeformende Schraube in den Durchbruch eingeschraubt wird,
dadurch gekennzeichnet, daß der Durchbruch mittels eines Lichtbogens, eines Elektronenstrahls oder eines Laserstrahls ausgebildet wird.

2. Verfahren nach Anspruch 1,
dadurch gekennzeichnet, daß der Lichtbogen oder Strahl eine rotierende Bewegung um seine Längsachse ausführt.

3. Verfahren nach Anspruch 1,
dadurch gekennzeichnet, daß der Lichtbogen oder Strahl eine Pendelbewegung ausführt.

4. Verfahren nach Anspruch 1,
dadurch gekennzeichnet, daß der Lichtbogen durch ein Wolfram-Inertgas- oder Plasma-Schneidverfahren erzeugt wird.

5. Verfahren nach Anspruch 4,
dadurch gekennzeichnet, daß die Schraube (38, 40) während der Ausbildung des Durchbruchs als Schweiß-Elektrode eingesetzt wird.

6. Verfahren nach mindestens einem der vorstehenden Ansprüche 2 bis 5,
dadurch gekennzeichnet, daß dem Werkstück (2) im Bereich des Durchbruchs vor dem Einschrauben der Schraube (38, 40) Wärme zugeführt wird, um die Plastizität des Werkstücks (2) zu beeinflussen.

7. Verfahren nach Anspruch 6,
dadurch gekennzeichnet, daß die Wärme mittels eines Lichtbogens zugeführt wird.

8. Verfahren nach mindestens einem der vorstehenden Ansprüche,
dadurch gekennzeichnet, daß die Schraube (38, 40) während des Einschraubens mittels einer Eintreibvorrichtung mit verschiedenen Drehzahlen rotiert wird.

9. Verfahren nach Anspruch 8,
dadurch gekennzeichnet, daß die Schraube (38, 40) mit variierbaren Axialkräften beaufschlagt wird.

10. Vorrichtung zum Bearbeiten eines Werkstücks (2), insbesondere zum thermischen Lochstechen, mit einem Schneidbrenner (4), welcher einen Lichtbogen, einen Elektronenstrahl oder einen Laserstrahl zur Einwirkung auf das Werkstück (2) bereitstellt,
dadurch gekennzeichnet, daß der Schneidbrenner (4) mindestens zwei voneinander trennbare Teile aufweist, die aus einer Betriebsstellung unter Bildung eines Zwischenraums (34) in eine Ruhestellung auseinanderfahrbar sind, so daß in der Ruhestellung ein beliebiges Werkzeug zum weiteren Bearbeiten des Werkstücks (2) durch den Zwischenraum (34) bewegbar ist, und die zurück in die Betriebsstellung zusammenfahrbar sind.

11. Vorrichtung nach Anspruch 10,
dadurch gekennzeichnet, daß der Schneidbrenner (4) zwei im wesentlichen identisch ausgebildete Brennerhälften (30, 32) aufweist, die im wesentlichen in einer Richtung senkrecht zur Ausbreitungsrichtung des Lichtbogens oder Strahls auseinander- bzw. zusammenfahrbar sind.

12. Vorrichtung nach Anspruch 11,
dadurch gekennzeichnet, daß die Brennerhälften (30, 32) mittels einer pneumatischen Antriebseinrichtung auseinander- bzw. zusammenfahrbar sind.

13. Vorrichtung nach mindestens einem der vorstehenden Ansprüche 10 bis 12, insbesondere zur Durchführung eines Verfahrens zum Herstellen einer Schraubverbindung unter Verwendung einer gewindeformenden Schraube (38,40) nach einem der Ansprüche 1 bis 9,
gekennzeichnet durch eine Eintreibvorrichtung zum Eintreiben der gewindeformenden Schraube (38, 40) in einen mittels des Schneidbrenners (4) im Werkstück (2) ausgebildeten Durchbruch, die ein in dem Zwischenraum (34) bewegbares Schraubwerkezug (36) zum Eintreiben der Schraube (38, 40) aufweist.

14. Vorrichtung nach Anspruch 13,
dadurch gekennzeichnet, daß das Schraubwerkzeug (36) im wesentlichen als rotierbares und in Richtung seiner Längsachse translatorisch bewegbares Stabelement ausgebildet ist, an dessen Ende Mittel zum Halten der Schraube (38, 40) vorgesehen sind.

15. Vorrichtung nach mindestens einem der vorstehenden Ansprüche 10 bis 14,
dadurch gekennzeichnet, daß der Schneidbrenner (4) Teil eines Wolfram-Inertgas- oder Plasmaschneidgerätes ist.

16. Vorrichtung nach Anspruch 15,
gekennzeichnet durch eine Schraube (38, 40) als Elektrode des Schneidbrenners (4).

17. Vorrichtung nach mindestens einem der vorstehenden Ansprüche 10 bis 16,
gekennzeichnet durch Mittel zum Einschnüren und/oder Ablenken des Lichtbogens bzw. des Strahls.

18. Schraube (38, 40) mit einem als Schweißelektrode verwendbaren Elektrodenabschnitt,
dadurch gekennzeichnet, daß der Elektrodenabschnitt (44, 58) im vorderen Bereich der Schraube (38, 40) angeordnet ist.

19. Schraube (38, 40) nach Anspruch 18,
dadurch gekennzeichnet, daß der Elektrodenabschnitt (44, 58) eine Ausnehmung aufweist, die einen Elektrodeneinsatz (48, 68) aus Wolfram oder dergleichen aufnimmt.

20. Schraube (38, 40) nach Anspruch 19,
dadurch gekennzeichnet, daß die Ausnehmung im wesentlichen zylinderförmig ist.

21. Schraube (38, 40) nach Anspruch 18,
dadurch gekennzeichnet, daß der Elektrodenabschnitt (44, 58) gegenüber dem Gewindeabschnitt einen geringeren Durchmesser aufweist.

22. Schraube (38, 40) nach einem der Ansprüche 18 bis 21, mit einem Kopfabschnitt und einem Gewindeabschnitt, der beim Einschrauben in einen Durchbruch in einem Werkstück (2) ein Gewinde formt,
dadurch gekennzeichnet, daß der Elektrodenabschnitt (44, 58) einen sich konisch in Richtung auf die Spitze der Schraube (38, 40) verjüngenden Aufweit-Abschnitt (64) aufweist.

23. Verwendung einer Schraube (38, 40) als Elektrode beim Schneiden. dem Bereich der Bohrung verfahren werden.
